# EUROPEAN PATENT APPLICATION

(11) **EP 1 344 991 A2**
(43) Date of publication of application: **17.09.2003**
(21) Application number: 03004787.2
(22) Date of filing: 05.03.2003
(51) Int. Cl.: F24F 3/14

(54) **A dehumidifying device comprising means for its suspension**

(30) Priority: 11.03.2002 IT TO20020048 U
(71) Applicant: Propack S.p.A., 10098 Rivoli, (Torino) (IT)
(72) Inventor: Vaula, Dante, 10091 Alpignano (Torino) (IT); La Castellana, Rocco, 10095 Grugliasco (Torino) (IT)
(74) Representative: Serra, Francesco

(57) **Abstract**

A dehumidifying device is described and comprises a sachet (2) containing hygroscopic and/or dehumidifying material, preferably in the form of granules or powder (3) and a tape (5) fixed to the sachet (2). The tape (5) is fixed to the sachet (2) by sewing or other fixing techniques.

## Description

The present invention relates to a dehumidifying device comprising means for its suspension.

The invention relates in particular to sachets, for example, fabric sachets, for example, of rectangular shape, containing a hygroscopic and/or dehumidifying substance and having suspension means along one of their sides.

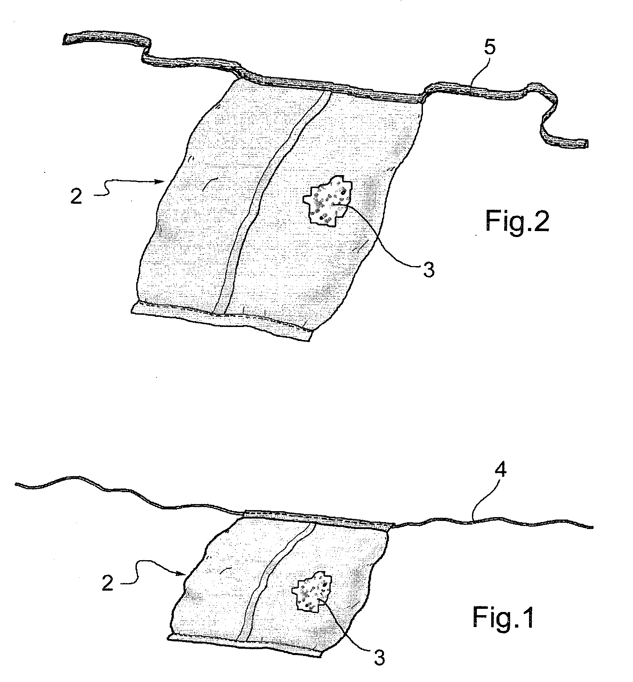

A sachet of the type described above is shown in Figure 1, in which a sachet 2 containing a hygroscopic and/or dehumidifying substance, for example, in the form of granules 3, is provided with a sewing thread or chain-stitching formed with the same thread 4, that is, sewing-machine thread fixed to one side of the sachet 2 by sewing.

The thread 4 may be tied to form a closed loop in order to hang the sachet 2 on a peg or a device projecting, for example, from a wall or inside a packaging container.

Devices such as that just described have the disadvantage that the hanging thread is inherently weak so that the sewing thread (or the chain-stitching formed with the thread) breaks easily, for example, as a result of rubbing of the two ends during transportation; moreover, the tying is quite difficult.

The object of the present invention is to provide a dehumidifying device comprising means for its suspension which overcomes the above-mentioned disadvantages and is easy to produce and inexpensive.

The present invention achieves the above-mentioned objects by means of a dehumidifying device comprising a sachet containing hygroscopic and/or dehumidifying material and having the characteristics specified in the appended claims.

Further characteristics and advantages of the present invention will become clear in the course of the following detailed description which is provided purely by way of nonlimiting example with reference to the appended drawings, in which:
Figure 1 (already described above) is a front view of a dehumidifying device according to the prior art, and
Figure 2 is a front view of a dehumidifying device according to the invention.

With reference to Figure 2, in which details identical or corresponding to those of Figure 1 are indicated by the same reference numerals, a sachet 2 containing hygroscopic and/or dehumidifying material, for example, in the form of granules or powder 3, is provided with a tape 5, fixed to the sachet 2 along one of its sides by sewing.

The tape 5 may be made of various materials and in various sizes (in height, in thickness and in length).

Moreover, the tape is not subject to wear in moist conditions as occurs with sewing thread or with chain-stitching (shown in Figure 1), which is damaged by exposure to moisture.

Clearly, a tape of the type described above permits improved tying and suspension in comparison with what is possible with the use of the thread according to the prior art since it is stronger and more resistant, for example, to any rubbing resulting from swinging of the suspended product during transportation.

Moreover, the weight and dimensions of the sachet 2 can naturally be increased, with increased dimensional and strength characteristics of the tape 5.

The tape 5 may be made, for example, of fabric, plastics material, or material of other types.

Naturally, the principle of the invention remaining the same, wide variations may be applied to the embodiment described and illustrated without, however, departing from the scope of protection of the present invention.

For example, the tape may be of the closed-loop type; if it is of the open-loop type, it can be closed by tying, gluing or any other means for fixing the two ends together.

The tape may be fixed to the sachet by sewing, gluing, electric welding, or any other fixing means.

## Claims

1. A dehumidifying device comprising a sachet (2) containing hygroscopic and/or dehumidifying material, for example, in the form of granules or powder (3), **characterized in that** it comprises a tape (5) fixed to the sachet (2).

2. A dehumidifying device according to Claim 1, **characterized in that** the tape (5) is fixed to the sachet (2) by sewing.

3. A dehumidifying device according to Claim 1, **characterized in that** the tape (5) is fixed to the sachet (2) by gluing, electric welding, heat-sealing, or other fixing techniques.
